(19) Europäisches Patentamt
European Patent Office
Office européen des brevets

(11) Veröffentlichungsnummer: **0 258 608**
**A1**

(12) # EUROPÄISCHE PATENTANMELDUNG

(21) Anmeldenummer: **87110614.2**

(22) Anmeldetag: **22.07.87**

(51) Int. Cl.⁴: **G11B 15/64 , G11B 15/58**

(30) Priorität: **25.07.86 DE 3625249**

(43) Veröffentlichungstag der Anmeldung:
**09.03.88 Patentblatt 88/10**

(84) Benannte Vertragsstaaten:
**AT CH DE FR GB IT LI NL SE**

(71) Anmelder: **Siemens Aktiengesellschaft Berlin und München**
**Wittelsbacherplatz 2**
**D-8000 München 2(DE)**

(72) Erfinder: **Rausch, Robert, Dipl.-Ing.(FH)**
**Heufelder Strasse 10**
**D-8000 München 80(DE)**

(54) **Einrichtung zur Dämpfung von Bandschwingungen bei einem Magnetbandgerät.**

(57) In Verbindung mit einem Magnetbandgerät, dessen Laufwerk aus Auf-und Abwickelspulen (1, 2), diesen zugeordneten Pufferkammern (3, 4 und 5, 6) und einer einzigen zwischen den Pufferkammern sowie einem Schreib/Lesekopf (7) benachbart angeordneten, in ihrer Laufrichtung umsteuerbaren Bandantriebsrolle (8) besteht, ist eine Einrichtung zur Dämpfung vorgesehen, die lokalen Verformungen des Magnetbandes (9) im Bereich des Kopfspiegels des Magnetkopfes entgegenwirkt. Diese Einrichtung besitzt ein Dämpfungselement (11) in Form eines pneumatisch wirksamen Düsenkammes mit einer Mehrzahl von unter Überdruck stehenden Düsen (112, 113). Diese sind längs einer quer zur Transportrichtung (vr) des Magnetbandes (9) verlaufenden Linie (s) derart angeordnet, daß der von ihnen abgegebene Luftstrahl im Bereich der Auflaufkante (74) des Magnetbandes am Spiegel des Magnetkopfes (7) mit einer geringen Kraftkomponente in Bandtransportrichtung (vr) wirkend auftrifft. Eine derartige Dämpfungseinrichtung ist insbesondere für als Digitalspeicher verwendete Magnetbandgeräte der oberen Leistungsklasse mit hohen Bandgeschwindigkeiten geeignet, die ein Lesen sowohl im Vorlauf als auch im Rücklauf ermöglicht.

FIG 4

## Einrichtung zur Dämpfung von Bandschwingungen bei einem Magnetbandgerät

Die Erfindung bezieht sich auf eine Einrichtung zur Dämpfung von Bandschwingungen bei einem Magnetbandgerät gemäß dem Oberbegriff des Patentanspruches 1.

Eine der Entwicklungsrichtungen bei Magnetbandgeräten, die als Digitalspeicher verwendet werden, führte zu immer höheren Bandgeschwindigkeiten. Auf dem Markt erhältlich sind heute bereits Magnetbandgeräte mit einer nominalen Bandgeschwindigkeit von 200 ips, was etwa 5 m/s entspricht. Binärdaten werden in Blöcken formatiert eingeschrieben. Bei handelsüblichen Magnetbandgeräten ist aus Gründen der Speicherkapazität eine Blocklücke von ca. 7 mm festgelegt. Diese entspricht im Start-/Stopbetrieb dem Weg innerhalb dessen das Magnetbandgerät angehalten und wieder gestartet werden muß. Deshalb treten bei Magnetbandgeräten mit hohen Bandgeschwindigkeiten im Start-/Stopbetrieb sehr hohe Bandbeschleunigungen bzw. -verzögerungen auf.

Die in Start-bzw. Stopphasen aus diesem Grund auf den Datenträger, das Magnetband, einwirkenden Kräfte verursachen Bandbewegungen bzw. -verformungen auch im Bereich des Magnetkopfes des Bandgerätes, die im einzelnen nicht völlig bekannt sind. Das beruht unter anderem darauf, daß sich die Kräfte bei Magnetbändern verschiedener Hersteller auch bei ein und demselben Magnetbandgerät unterschiedlich auswirken.

Offensichtlich bewirken die Beschleunigungskräfte mehr oder minder starke lokale Verformungen des Magnetbandes auch im Bereich des Kopfspiegels des Magnetkopfes, die die Lesesignalamplitude herabsetzen. Bei einem Magnetbandtyp können insbesondere die Randspuren von diesem Effekt betroffen sein, während es bei einem anderen Magnetbandtyp auch die mittleren Aufzeichnungsspuren sind.

Dem überlagert sich noch ein weiterer Einfluß, der aus einem Merkmal von Hochleistungsmagnetbandgeräten resultiert. Bei kommerziellen Magnetbandgeräten wird das Magnetband zum Schreiben von einer Abwickelspule zu einer Aufwickelspule transportiert. Häufig erfolgt der Bandtransport aufgrund einer einzigen, in ihrer Bewegungsrichtung umsteuerbaren Bandantriebsrolle (single capstan), die dem Magnetkopf benachbart angeordnet ist. Kommerzielle Magnetbandgeräte sind vielfach derart ausgerüstet, daß sie ein Lesen auch während eines Rücktransportes des Magnetbandes von der Aufwickelspule zur Abwickelspule ermöglichen, diese Funktion wird üblicherweise als "Lesen rückwärts" bezeichnet. Beim Bandtransport in Vorwärtsrichtung zieht eine in Laufrichtung des Magnetbandes nach dem Magnetkopf angeordnete Bandantriebsrolle das Magnetband über den Kopfspiegel des Magnetkopfes, in Gegenrichtung dagegen "schiebt" die Bandantriebsrolle das Magnetband über den Kopfspiegel.

Diese Tatsache wirkt sich, gerade auch während der Start-bzw. Stopphasen beim Betrieb eines Magnetbandgerätes mit den Funktionen Lesen in Vorwärtsrichtung, aber auch in Rückwärtsrichtung in unterschiedlicher Weise aus, da sich gerade während dieser Phasen auch die gepufferte Bandlänge in den Pufferkammern verändert. Die Untersuchungen haben bestätigt, daß die Startphase in Verbindung mit der Gerätefunktion "Lesen rückwärts" ein besonders kritischer Betriebszustand ist. Insbesondere hier können derartige Einbrüche im Verlauf der Lesesignalamplitude auftreten, daß sie gegebenenfalls zu Lesefehlern führen, obwohl kom merzielle Magnetbandgeräte Lesesignale trotz großer Abweichungen von der Sollamplitude noch eindeutig diskriminieren können.

Aus dem Vergleich unterschiedlicher Lesesignalamplituden bei einem Bandtransport in Vorwärts-bzw. Rückwärtsrichtung während der Startphase des Magnetbandgerätes kann man - schließen, daß ein unterschiedlicher Bandzug eine der kritischen Einflußgrößen ist. Deshalb könnte man versuchen, das geschilderte Problem durch einen erhöhten Bandzug zu beheben. Bei einem vorgegebenen Bandlauf, d. h. der geometrischen Ausgestaltung des Laufwerkes, muß aber eine Erhöhung des Bandzuges über eine Erhöhung des Unterdruckes in den Pufferkammern zu Veränderungen der Eigenschaften des Laufwerkes an sich führen.

Einer Erhöhung des Bandzuges, ohne andere unerwünschte Rückwirkungen für den Bandtransport, sind auch deshalb enge Grenzen gesetzt, weil der von der Norm vorgeschriebene Bandzug von 3,6 N nicht überschritten werden darf. Eine Erhöhung des Bandzuges hat weiterhin die Nachteile eines erheblich steigenden Leistungsbedarfes und darüber hinaus einer Erhöhung der Flächenpressung zwischen Magnetband und dem Magnetkopfspiegel. Eine Erhöhung des Bandzuges allein ist daher nicht geeignet, das Problem zu lösen.

Nun ist es aber in der Magnetbandtechnik auch bekannt, den Kontakt zwischen Magnetband und Magnetkopfspiegel durch einen Andruckfilz zu verbessern. Diese Maßnahme ist insbesondere auch in Verbindung mit Magnetbandrecordern der Unterhaltungselektronik bzw. Magnetbandgeräten der unteren Leistungsklasse mit niedrigen Bandgeschwindigkeiten bekannt. Bei derartigen Geräten mag eine derartige Maßnahme noch vertretbar sein, ihre Verwendung bei schnell laufenden kommerziellen Magnetbandgeräten dagegen ist wegen eines zu hohen Bandverschleißes, insbesondere aber auch wegen des Nachteiles einer übermäßigen Erhitzung des Magnetbandes nicht anwendbar.

Um diese Nachteile auszuschließen und dennoch ein lokales Abheben des Magnetbandes vom Magnetkopfspiegel zu vermeiden, könnte man, in Äquivalenz zu einem mechanischen Element zum Andrücken des Magnetbandes, auf pneumatischem Wege ein flächiges Druckluftpolster dem Kopfspiegel gegenüberstehend erzeugen. Untersuchungen haben jedoch ergeben, daß dabei mit einem flächigen Luftpolster keine wirksame Abhilfe für die Störungen in der Lesesignalamplitude zu erzielen ist.

Der Erfindung liegt daher die Aufgabe zugrunde, eine Einrichtung zur Dämpfung von Bandschwingungen bei einem Magnetbandgerät der eingangs genannten Art zu schaffen, die mit einfachen Mitteln und ohne Rückwirkungen auf das Laufwerk Bandverformungen im Bereich des Magnetkopfes, insbesondere während der Start-bzw. Stopphasen des Magnetbandgerätes, entgegenwirkt. Bei einer Einrichtung zur Dämpfung von Bandschwingungen der eingangs genannten Art wird diese Aufgabe erfindungsgemäß gelöst durch die im Kennzeichen des Patentanspruches. 1 beschriebenen Merkmale.

Wesentlich für die erfindungsgemäße Lösung ist, daß aufgrund der besonderen konstruktiven Ausgestaltung des Dämpfungselementes gerade kein flächiges Luftpolster erzeugt wird, denn ein Luftpolster bewirkt keinerlei wirksame Verbesserung der Lesesignalamplitude. Stattdessen wird mit der erfindungsgemäßen Lösung ein Druckprofil angestrebt, das auf das Magnetband in einer quer zur Laufrichtung sich erstreckenden Zone einwirkt, die seitlich, d. h. also in Bandlaufrichtung gesehen, eng begrenzt ist. Abstrahiert betrachtet, wird mit der erfindungsgemäßen Lösung angestrebt, auf das Magnetband nur längs einer quer zur Bandlaufrichtung verlaufenden Linie einzuwirken. Der Einwirkungsbereich liegt dort, wo das Magnetband beim Auflaufen auf den Spiegel des Magnetkopfes seine größte Umlenkung erfährt.

Ferner ist weiterhin wesentlich, daß der auf das Magnetband einwirkende Luftstrahl nicht exakt senkrecht zur wirksamen Oberfläche des Kopfspiegels gerichtet ist, sondern in Bandtransportrichtung geringfügig geneigt ist, so daß sich eine kleine Kraftkomponente in Transportrichtung ergibt. Wie in Unteransprüchen beschriebenen Weiterbildungen der Erfindung zeigen, beträgt dieser Neigungswinkel gegenüber der Senkrechten zur Fläche des Magnetbandes weniger als 10, vorzugsweise etwa 8 Winkelgrade. Die wirksame Kraftkomponente in Bandtransportrichtung ist daher tatsächlich sehr klein gegenüber der senkrecht auf das Magnetband einwirkenden Kraftkomponente, offenbar reicht sie aber jedoch aus, um lokal die Umlenkung des Magnetbandes zu unterstützen, d. h. das Magnetband besser an den benachbarten Lesespalt anzudrücken.

Ohne daß dies im einzelnen physikalisch völlig geklärt ist, bewirkt aber offensichtlich die größere, vertikal wirkende Kraftkomponente eine Streckung des Magnetbandes in Richtung seiner Seitenkanten, so daß es sich großflächig an den Lesespalt anlegt. Denn anders ist die wesentlich erhöhte Gleichmäßigkeit des Verlaufes der Lesesignalamplitude über alle Datenspuren hinweg nicht erklärbar.

Wie andere Weiterbildungen der Erfindung zeigen, wird ein gebündelter Luftstrom mit einem quer zur Laufrichtung des Magnetbandes wirkenden definierten Strömungsprofil angestrebt, das in der Bandmitte ein flaches Maximum aufweist und an den Seitenkanten des Magnetbandes symmetrisch linear abfällt. Neben der erwünschten Funktion zur Erzielung eines gleichmäßigen geradlinigen Bandquerschnittes hat ein derartig ausgebildetes Dämpfungselement auch den Vorteil von nahezu vernachlässigbarem Luftverlust. Der tatsächliche Leistungsmehrbedarf liegt in der Größenordnung von nur wenigen Prozenten des gesamten Bedarfes. Andererseits wird wegen der linienhaften Wirkung auch die Flächenpressung des Magnetbandes am Spiegel des Magnetkopfes nur so geringfügig erhöht, daß der zusätzliche Bandverschleiß und die zusätzlich auftretende Reibungswärme vernachlässigbar sind.

Andere Weiterbildungen der Erfindung ergeben sich aus der Gesamtheit der Patentansprüche und zusätzliche Vorteile sind der nachfolgenden Beschreibung eines Ausführungsbeispieles der Erfindung zu entnehmen, die anhand der Zeichnung erfolgt. Dabei zeigt:

Fig. 1 die Prinzipdarstellung eines Laufwerkes für ein Magnetbandgerät, in der eine erfindungsgemäße Einrichtung zur Dämpfung von Bandschwingungen, dem Magnetkopf gegenüberstehend, angeordnet ist,

Fig. 2 beispielhaft den Verlauf von Lesesignalamplituden bei Vorlauf bzw. Rückwärtslauf des Magnetbandes jeweils in der Wiederanlaufphase des Magnetbandgerätes,

Fig. 3 eine Prinzipdarstellung der Funktion einer erfindungsgemäßen Dämpfungseinrichtung, wobei insbesondere eine Ansicht der Kontur des Spiegels des Magnetkopfes im Ausschnitt vergrößert dargestellt ist,

Fig. 4 in einer schematischen Darstellung, in Bandrichtung gesehen, einen Teilschnitt durch die Dämpfungseinrichtung und

Fig. 5 ein mit dieser Dämpfungseinrichtung angestrebtes Strömungsprofil in der Ebene quer zur Laufrichtung des Magnetbandes.

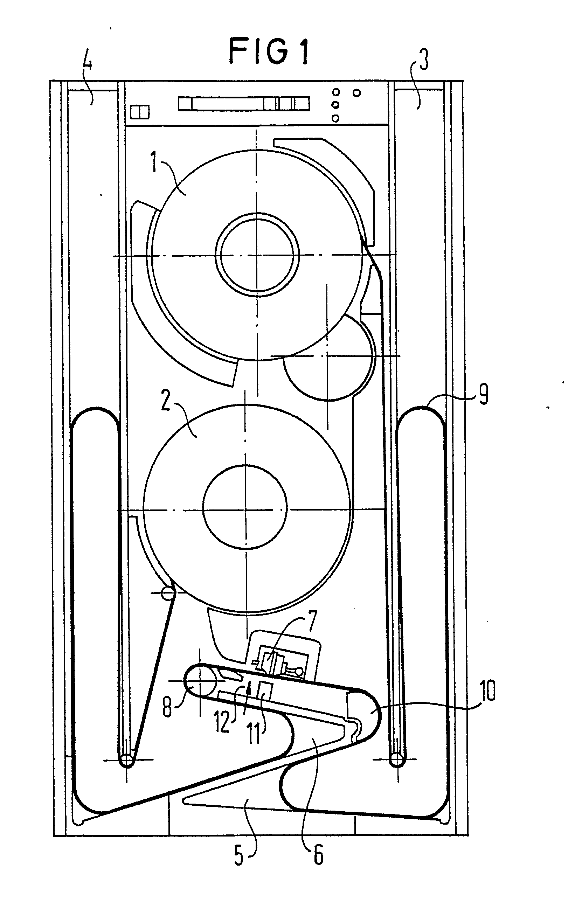

Das in Fig. 1 in einer Prinzipdarstellung gezeigte Laufwerk eines Magnetbandgerätes weist eine Abwickelspule 1 und darunter liegend eine Aufwickelspule 2 auf. Jede Spule ist seitlich eine Pufferkammer 3 bzw. 4 mit nach unten geöffneten Enden zugeordnet. Außerdem sind zwei ineinander verschachtelte, im wesentlichen horizontal ausgerichtete Vorkammern 5 bzw. 6 vorgesehen, die jeweils in Richtung einer der Pufferkammern 3 bzw. 4 geöffnet sind. Oberhalb der Pufferkammern 5, 6 ist ein Magnetkopf 7 angeordnet, der - wie bei als Digitalspeichern verwendeten kommerziellen Magnetbandgeräten üblich - als kombinierter Mehrspur-Lese/Schreibkopf ausgebildet ist.

Unmittelbar dem Magnetkopf 7 benachbart, ist eine Bandantriebsrolle 8 vorgesehen, die in ihrer Drehrichtung umsteuerbar ist. Die Vorwärtsrichtung entspricht einer Drehrichtung der Bandantriebsrolle entgegen dem Uhrzeigersinn. Dabei läuft ein Magnetband 9 von der Abwickelspule in die zugeordnete Pufferkammer 3, von dort in die Vorkammer 5 und über einen pneumatischen Umlenkpfosten 10 am Magnetkopf 7 vorbei auf der Bandantriebsrolle 8. Diese fördert das Magnetband 9 über die zweite Vorkammer 6 und die zweite Pufferkammer 4 zur Aufwickelspule 2. In Rückwärtsrichtung wird das Magnetband von der Aufwickelspule 2 über die Vor-und Pufferkammern 5, 6 bzw. 3, 4 an die Abwickelspule 1 abgegeben. Transportiert wird das Magnetband 9 in jedem Fall·allein durch die Bandantriebsrolle 8, während Abwickelspule 1 und Aufwickelspule 2 unabhängige Wickelantriebe besitzen, die über die Länge der gepufferten Bandschlaufen in den Pufferkammern 3, 4 gesteuert werden.

Das hier als Beispiel ausgewählte Laufwerk eines Hochleistungsmagnetbandgerätes ist an sich bekannt und bedarf keiner detaillierten Erläuterung, denn hier ist nur von Bedeutung, daß das Magnetband 9 am kombinierten Mehrspur-Schreib/Lesekopf 7 vorbei allein durch die Bandantriebsrolle 8, allerdings im Zusammenwirken insbesondere mit den Vorkammern 5, 6, in beiden Laufrichtungen gefördert wird.

Üblicherweise arbeiten derartige Magnetbandgeräte im Start/Stop-Betrieb, mit der Besonderheit, daß das Magnetband 9 möglichst ohne jeden Schlupf gegenüber der Bandantriebsrolle 8 kurzfristig abgebremst bzw. beim Wiederanlaufen sehr - schnell wieder auf nominale Bandgeschwindigkeit gebracht werden muß. Bei schnell laufenden Magnetbandgeräten dieser Leistungsklasse beträgt die Nenngeschwindigkeit des Magnetbandes 200 ips, was im metrischen System etwa 5 m/s entspricht. Die Stop-bzw. Startbewegungen des Magnetbandes 9 müssen innerhalb einer Blocklücke ablaufen, die bei diesem Gerätetyp üblicherweise nur etwa 7 mm beträgt. Offensichtlich resultieren aus diesen Randbedingungen hohe Stopverzögerungen bzw. Startbeschleunigungen des Magnetbandes 9. Diese können zu unerwünschten Bandbewegungen führen, die sich insbesondere im Bereich des Mehrspur-Schreib/Lesekopfes 7 störend bemerkbar machen.

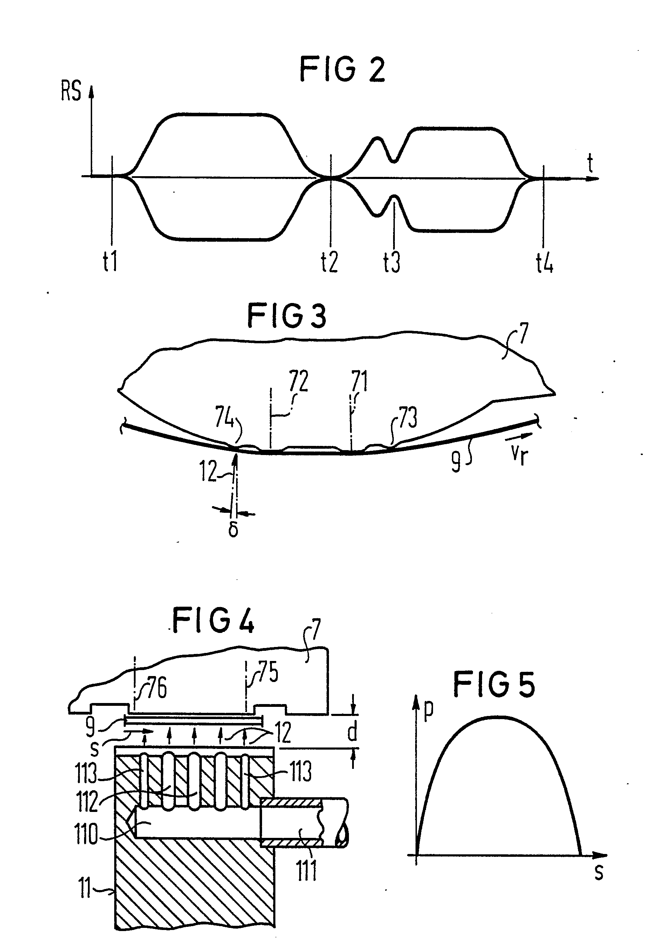

In Fig. 2 ist als Beispiel für die Auswirkungen einer derartigen Störung der Kurvenverlauf für die Signalamplitude eines Lesesignales RS über der Zeitachse t dargestellt. Dabei ist zwischen den Zeitpunkten t1 und t2 ein Signalverlauf für den Betriebszustand "Lesen in Vorwärtsrichtung" dargestellt, wenn also das Magnetband 9 gestartet wird, auf Nenngeschwindigkeit hochläuft und - schließlich wieder abgebremst wird. Die stetige Zunahme der Lesesignalamplitude in der Startphase entspricht erwartungsgemäß der Beschleunigung des Magnetbandes 9, das Lesesignal RS erreicht sein Maximum, sobald das Magnetband 9 die Nenngeschwindigkeit erreicht hat. Analoges gilt für den abfallenden Kurvenast.

Zwischen den Zeitpunkten t2 und t4 ist nun ein vergleichbarer Kurvenverlauf des Lesesignales RS für den Betriebszustand "Lesen rückwärts" dargestellt, bei dem das Magnetband 9 in Rückwärtsrichtung transportiert wird. Auch bei diesem Beispiel nimmt das Lesesignal RS erwartungsge mäß zunächst stetig zu, hat aber dann zum Zeitpunkt t3 einen ausgeprägten tiefen Einbruch in der Signalamplitude, um erst danach wieder anzusteigen und das Maximum bei Nenngeschwindigkeit des Magnetbandes 9 zu erreichen. Dieser Signaleinbruch demonstriert die Auswirkung einer Störung der Bandbewegung beim Wiederanlaufen des Magnetbandgerätes, die im kritischen Fall sogar zu Fehlern bei der Auswertung des Lesesignales führen kann, obwohl die Leseelektronik derartiger Magnetbandgeräte normalerweise hinsichtlich Schwankungen der Lesesignalamplitude relativ unempfindlich ist.

Untersuchungen haben nun ergeben, daß derartige, in Fig. 2 beispielhaft dargestellte Störungen nicht etwa auf einem wegen der hohen Bandbeschleunigung auftretenden Schlupf des Magnetbandes 9 gegenüber der Bandantriebsrolle 8 beruhen. Vielmehr sind unerwünschte Bandbewegungen im Bereich des Mehrspur-Schreib/Lesekopfes 7 die Ursache, die ein zeitweiliges lokales Abheben des Magnetbandes 9 vom Kopfspiegel des Mehrspur-Schreib/Lesekopfes 7 zumindestens im Bereich seines Lesespaltes hervorrufen. Die Untersuchungsergebnisse werden insbesondere dadurch bestätigt, daß bei ein und demselben Vorgang in benachbarten Datenspuren unterschiedliche Signalverläufe des Lesesignales RS gemessen wurden.

Zurückkehrend zu Fig. 1 ist nun unterhalb des Magnetkopfes 7 ein pneumatisches Dämpfungselement 11 schematisch dargestellt. Dieses richtet einen gebündelten Luftstrahl, - schematisch durch einen Pfeil 12 angedeutet, gegen die Unterseite des Magnetbandes 9, damit sich dieses im Bereich des Mehrspur-Schreib/Lesekopfes 7 besser an dessen Kontur anlegt.

Dies ist schematisch nochmals in Fig. 3 verdeutlicht, die insbesondere in vergrößertem Maßstab die Kontur des Kopfspiegels des Mehrspur-Schreib/Lesekopfes 7 und das Magnetband 9 zeigt, das in Rückwärtsrichtung vr bewegt wird. Die Kontur dieses an sich bekannten Mehrspur-Schreib/Lesekopfes besteht im wesentlichen aus einem Kreisabschnitt. Zwei unterbrochene Linien 71 und 72 deuten die Lage der Schreibspalte bzw. der Lesespalte des Mehrspur-Schreib/Lesekopfes 7 an. Zu beiden Seiten der Spalte deuten zwei höckerförmige Erhebungen in der Kontur Auflaufleisten 73 bzw. 74 für das Magnetband 9 an, wenn es in Vorwärts-bzw. Rückwärtsrichtung transportiert wird.

Wie Fig. 3 andeutet, ist die der Rückwärtsrichtung zugeordnete Auflaufleiste 74 der Ort, an dem das Magnetband 9 am Kopfspiegel des Mehrspur-Schreib/Lesekopfes 7 umgelenkt wird. Unmittelbar hinter dieser Auflaufleiste 74 soll, wie in Fig. 3 wieder durch den Pfeil 12 angedeutet ist, der vom Dämpfungselement 11 (in Fig. 3 nicht dargestellt) abgegebene Luftstrom das Magnetband 9 treffen. Gegenüber dem im Bereich der Luftspalte 71 bzw. 72 im wesentlichen horizontalen Verlauf des Magnetbandes 9 ist dieser Luftstrom um einen kleinen Winkel angestellt. Dieser Neigungswinkel $\delta$ beträgt etwa 8°.

In Fig. 4 ist nun eine Ansicht der Dämpfungseinrichtung gezeigt, die in einer zur Fig. 3 senkrechten Ebene liegt. Im Ausschnitt ist ein Teil des Mehrspur-Schreib/Lesekopfes 7 angedeutet, zwei strichpunktierte Linien 75 und 76 geben den Ort für die den Datenspuren 1 bzw. 9 zugeordneten Magnetkopfeinheiten an. Darunter ist das Magnetband 9 im Querschnitt angedeutet. In einem Abstand d zum Kopfspiegel des Mehrspur-Schreib/Lesekopfes 7 ist das Dämpfungselement 11 angeordnet. Der Abstand d möge beispielsweise 4 mm betragen.

Das Dämpfungselement 11 ist in einem Teilschnitt dargestellt, der seinen wesentlichen Aufbau illustriert. Es weist eine horizontal verlaufende Bohrung auf, die einen Zuführkanal 110 für Druckluft bildet, die über eine Druckleitung 111 an die zentrale Luftversorgung des Magnetbandgerätes angeschlossen sein mag und von dort, in an sich bekannter Weise über Druckluftventile gesteuert, das Dämpfungselement 11 mit Druckluft versorgt. Senkrecht zu dem Zuführkanal 110 ist eine Reihe von Luftdüsen 112 bzw. 113 in regelmäßigen Abständen angeordnet. Die in bezug auf das Magnetband 9 außen liegenden Düsen 113 haben einen geringeren Durchmesser als die zentralen Düsen 112.

Der Sinn dieser Maßnahme besteht darin, ein Druckprofil zu schaffen, wie es beispielhaft in Fig. 5 dargestellt ist. Angestrebt wird eine symmetrische Verteilung des Druckes p über eine Querschnittslinie s des Magnetbandes 9, die ein flaches, jedoch ausgeprägtes Maximum in der Bandmitte aufweist und im Bereich der Seitenkanten des Magnetbandes symmetrisch und im wesentlichen linear abfällt. Bei in regelmäßigen Abständen angeordneten Düsen 112 und 113 kann dies eben dadurch erreicht werden, daß die Durchmesser der Düsen 112 beispielsweise 0,5 mm und diejenigen der Düsen 113 0,4 mm betragen.

Ein weiterer wesentlicher Gerichtspunkt bei der Ausgestaltung des Dämpfungselementes 11 ist, daß dieser aufgefächerte Luftstrom auf das Magnetband 9 nicht etwa flächenhaft sondern nur längs einer Linie auftrifft. Der Luftstrom ist, in Transportrichtung des Bandes gesehen, stark gebündelt. Bildlich gesprochen, wird das Magnetband 9 über einen Luftkamm geführt, der wie eine Abweiskante wirkt. Das Strömungsprofil des Luftstromes, in Bandtransportrichtung vr betrachtet, ist eine möglichst scharf ausgebildete Keule, die den gewünschten Effekt bewirkt, das Magnetband in Richtung der Kontur des Kopfspiegels abzuweisen und zugleich zu glätten.

Abgesehen von den erläuterten Randbedingungen hinsichtlich der Blasrichtung des vom Dämpfungselement 11 abgegebenen Luftstromes, seiner Neigung $\delta$ und dem erläuterten Druckprofil, stellt die geschilderte Ausgestaltung des Dämpfungselementes selbst nur eine der möglichen Ausführungsformen dar. So wäre z. B. das gewünschte Druckprofil auch mit Luftdüsen gleichen Durchmessers, jedoch unterschiedlichen Abstandes untereinander erzielbar. Das Dämpfungselement könnte als Hohlkörper konzipiert sein und anderes mehr.

## Ansprüche

1. Einrichtung zur Dämpfung von Bandschwingungen bei einem Magnetbandgerät mit einem Laufwerk, bestehend aus je einer Auf-und Abwickelspule, diesen zugeordneten Pufferkammern und einer zwischen den Pufferkammern sowie einem Schreib/Lesekopf benachbart angeordneten, in ihrer Laufrichtung umsteuerbaren Bandantriebsrolle, wobei diese Einrichtung ein Dämpfungselement aufweist, das Verformungen des Magnetbandes im Bereich des Kopfspiegels des Magnetkopfes entgegenwirkt, **dadurch gekennzeichnet,** daß das Dämpfungselement (11) in Form eines pneumatisch wirksamen Düsenkammes ausgebildet ist, der eine Mehrzahl von unter Überdruck stehenden Düsen (112, 113) aufweist, die längs einer quer zur Transportrichtung (vr) des Magnetbandes (9) verlaufenden Linie (s) derart angeordnet sind, daß der von ihnen abgegebene Luftstrahl im Bereich der Auflaufkante (74) des Magnetbandes am Spiegel des Magnetkopfes (7) mit einer geringen Kraftkomponente in Bandtransportrichtung (vr) wirkend auftrifft.

2. Einrichtung nach Anspruch 1, **dadurch gekennzeichnet,** daß der Neigungswinkel (δ) der Strahlrichtung des Dämpfungselementes (11) gegenüber der Senkrechten zur Ebene des Magnetbandes (9) im Bereich des Spiegels des Magnetkopfes (7) weniger als 10° beträgt.

3. Einrichtung nach Anspruch 2, **dadurch gekennzeichnet,** daß der Neigungswinkel (δ) etwa 8° beträgt.

4. Einrichtung nach einem der Ansprüche 1 bis 3, **dadurch gekennzeichnet,** daß zum Erzielen ein an den beiden Bandkanten zunächst linear ansteigenden und in Bandmitte ein flaches Maximum aufwei senden Druckprofiles des vom Dämpfungselement (11) abgegebenen Luftstrahles die Düsen (112, 113) des Dämpfungselementes (11) in regelmäßigen Abständen angeordnet sind, in einem gemeinsamen, während des Schreib/Lesebetriebes unter Überdruck stehenden Zuführkanal (110) enden und symmetrisch, von außen nach der Mitte hin betrachtet, zunehmenden Durchmesser aufweisen.

5. Einrichtung nach Anspruch 4, **dadurch gekennzeichnet,** daß die Durchmesser der Düsen (112, 113), ungeachtet ihrer Unterschiede immer noch klein gegenüber dem Abstand der Düsen untereinander sind.

6. Einrichtung nach Anspruch 5, **dadurch gekennzeichnet,** daß die Düsendurchmesser kleiner als 1 mm, vorzugsweise jedoch nicht größer als 0,5 mm sind.

7. Einrichtung nach einem der Ansprüche 4 bis 7, **dadurch gekennzeichnet,** daß der Überdruck im Zuführkanal (110) im wesentlichen in einem Bereich von 3 bis 4 m WS liegt.

8. Einrichtung nach einem der Ansprüche 1 bis 7 in Verbindung mit einer Bandantriebsrolle (8), die, in Vorwärtsrichtung des Bandtransportes gesehen, hinter dem Magnetkopf (7) angeordnet ist und mit einem kombinierten Schreib/Lesekopf (7), dessen Kopfspiegel, dem Schreib-und dem Lesespalt (71 bzw. 72) jeweils benachbarte, außenliegende Auflaufleisten (73 bzw. 74) besitzt, wobei zwischen diesen Auflaufleisten und dem benachbarten Spalt sowie den Spalten selbst die Spiegeloberfläche geringfügig zurückgesetzt ist, **dadurch gekennzeichnet,** daß das Dämpfungselement (11) der dem Lesekopf zugeordneten Auflaufleiste (74) gegenüberliegend angeordnet ist und in der Bandtransportrichtung (vr) für den Rückwärtslauf geringfügig geneigt ist, so daß der von ihm abgegebene Luftstrahl (12) das Magnetband (9) unmittelbar hinter dieser Auflaufleiste (74) trifft.

# FIG 1

## FIG 2

## FIG 3

## FIG 4

## FIG 5

<table>
<tr><td></td><td align="center">Europäisches<br/>Patentamt</td><td align="center">**EUROPÄISCHER RECHERCHENBERICHT**</td><td>Nummer der Anmeldung<br/><br/>EP  87 11 0614</td></tr>
</table>

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (Int Cl.4) |
|---|---|---|---|
| A | US-A-3 678 216  (J.J. ROUSSO) * Spalte 2, Zeile 3 - Spalte 3, Zeile 40; Figuren * --- | 1,4,8 | G 11 B  15/64 G 11 B  15/58 |
| A | PATENT ABSTRACTS OF JAPAN, Band 7, Nr. 60 (P-182)[1205], 12. März 1983; & JP-A-57 205 847 (OKI YUNIBATSUKU K.K.) 17-12-1982 * Zusammenfassung; Figur * --- | 1,8 | |
| A | US-A-3 418 434  (J.B. GROENEWEGEN) * Zusammenfassung; Spalte 2, Zeile 45 - Spalte 4, Zeile 6; Figuren * --- | 1,8 | |
| A | US-A-3 134 527  (J.K. WILLIS) * Ansprüche; Figuren * --- | 1 | **RECHERCHIERTE SACHGEBIETE (Int. Cl.4)** |
| A | IBM TECHNICAL DISCLOSURE BULLETIN, Band 15, Nr. 8, Januar 1973, Seiten 2503-2504, New York, US; L.S. FRAUENFELDER et al.: "Elimination of transverse tape vibration in a magnetic tape unit" * Seiten 2503-2504; Figuren * ---                    -/- | 1 | G 11 B |

Der vorliegende Recherchenbericht wurde für alle Patentansprüche erstellt.

| Recherchenort | Abschlußdatum der Recherche | Prüfer |
|---|---|---|
| DEN HAAG | 27-10-1987 | DECLAT M.G. |

## EINSCHLÄGIGE DOKUMENTE

Seite 2

| Kategorie | Kennzeichnung des Dokuments mit Angabe, soweit erforderlich, der maßgeblichen Teile | Betrifft Anspruch | KLASSIFIKATION DER ANMELDUNG (Int. Cl. 4) |
|---|---|---|---|
| A | DE-A-1 424 511  (IBM)<br>* Ansprüche; Figuren *<br>--- | 1,8 | |
| A | EP-A-0 114 689  (SIEMENS)<br>--- | | |
| A | DE-A-1 499 984  (TELEFUNKEN)<br>--- | | |
| A | US-A-2 962 200  (W.H.P. POULIART)<br>--- | | |
| A | US-A-4 337 885  (A.F. STAHLER)<br>---<br>----- | | RECHERCHIERTE SACHGEBIETE (Int. Cl.4) |

Der vorliegende Recherchenbericht wurde für alle Patentansprüche erstellt.

| Recherchenort | Abschlußdatum der Recherche | Prüfer |
|---|---|---|
| DEN HAAG | 27-10-1987 | DECLAT M.G. |